(19) Europäisches Patentamt
European Patent Office
Office européen des brevets

(11) EP 3 636 707 B1

(12) EUROPEAN PATENT SPECIFICATION

(45) Date of publication and mention of the grant of the patent:
**06.10.2021 Bulletin 2021/40**

(21) Application number: **18812803.7**

(22) Date of filing: **17.05.2018**

(51) Int Cl.:
***C08L 9/00*** (2006.01) ***B60C 1/00*** (2006.01)
***C08K 3/04*** (2006.01) ***C08K 3/36*** (2006.01)
***C08K 5/10*** (2006.01) ***C08K 5/25*** (2006.01)

(86) International application number:
**PCT/JP2018/019184**

(87) International publication number:
**WO 2018/225478 (13.12.2018 Gazette 2018/50)**

(54) **RUBBER COMPOSITION FOR TIRE AND TIRE**

KAUTSCHUKZUSAMMENSETZUNG FÜR REIFEN UND REIFEN

COMPOSITION DE CAOUTCHOUC POUR PNEU ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2017 JP 2017112979**

(43) Date of publication of application:
**15.04.2020 Bulletin 2020/16**

(73) Proprietor: **Bridgestone Corporation**
**Tokyo 104-8340 (JP)**

(72) Inventor: **MATSUI Takahiko**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**WO-A1-2010/055919**
**WO-A1-2018/025966**
**WO-A1-2018/101368**
**JP-A- S5 114 885**
**JP-A- S5 114 886**
**JP-A- H11 292 834**
**JP-A- 2003 238 736**
**JP-A- 2006 290 838**
**JP-A- 2007 131 730**
**JP-A- 2009 221 262**
**JP-A- 2009 221 262**
**JP-A- 2013 144 761**
**JP-A- 2016 006 153**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

TECHNICAL FIELD

The present invention relates to a tire rubber composition and a tire.

BACKGROUND

The need for fuel-efficient vehicles has been growing in recent years, and tires with low rolling resistance are in demand. Hence, rubber compositions having low tanδ and excellent low heat generating property are desired as rubber compositions used in tire treads and the like. Meanwhile, rubber compositions used in tires are required to have improved wear resistance, in terms of long tire life. These performances are mutually contradictory, and there is the need to develop techniques for achieving both performances at high level.

For example, wear resistance can be improved by increasing the content of a reinforcing filler such as carbon black or reducing the particle size of the reinforcing filler. This, however, causes a decrease in the low heat generating property of the rubber composition.

As a technique for improving wear resistance without causing a decrease in low heat generating property, for example, PTL 1 discloses a rubber composition in which isoprene rubber is blended with carbon black that has a fine particle size and a wider aggregate distribution (i.e. the mode (Dst) of the aggregate size distribution is decreased and the half-width (ΔD50) of the aggregate size distribution is widened).

CITATION LIST

Patent Literature

PTL 1: JP H11-209515 A

SUMMARY

(Technical Problem)

The technique disclosed in PTL 1 is effective to a certain extent in achieving both low heat generating property and wear resistance. However, further improvement in wear resistance is desirable.

It could therefore be helpful to provide a tire rubber composition having excellent wear resistance with favorable low heat generating property. It could also be helpful to provide a tire excellent in low heat generating property and wear resistance.

(Solution to Problem)

A tire rubber composition (hereafter also simply referred to as "rubber composition") according to the present invention comprises: a rubber component containing diene-based rubber; a compound expressed by the following Formula (I); and carbon black whose CTAB adsorption specific surface area, represented as CTAB, is 120 $m^2/g$ or more,

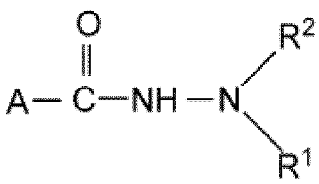 ------ (I)

where A is an aryl group having at least two hydroxyl groups, $R^1$ and $R^2$ are each independently at least one substituent selected from the group consisting of a hydrogen atom, an acyl group, an amide group, an alkyl group, a cycloalkyl group, and an aryl group.

Another tire rubber composition according to the present invention comprises: a rubber component containing diene-based rubber; a compound expressed by the following Formula (II); and carbon black whose CTAB adsorption specific surface area, represented as CTAB, is 120 $m^2/g$ or more,

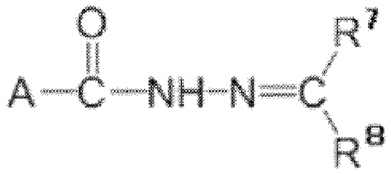 ··· (II)

where A is an aryl group expressed by the following Formula (A-1) or Formula (A-2), and $R^7$ and $R^8$ are each independently at least one substituent selected from a hydrogen atom, an alkyl group, and an alkenyl group,

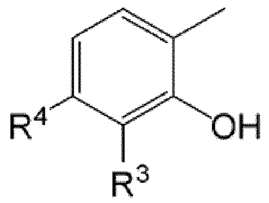 (A−1)、 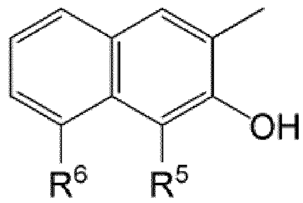 (A−2)

where $R^3$, $R^4$, $R^5$, and $R^6$ are polar groups.

With this structure, excellent wear resistance can be achieved with favorable low heat generating property.

In the tire rubber composition according to claim 1 A is an aryl group having at least two hydroxyl groups. Thus, more excellent low heat generating property and wear resistance can be achieved.

Preferably, in the tire rubber composition according to the present invention, A in the compound expressed by the Formula (I) is a phenyl group or a naphthyl group. Thus, more excellent low heat generating property and wear resistance can be achieved, and also excellent practicality can be achieved.

Preferably, in the tire rubber composition according to the present invention, $R^1$ and $R^2$ in the compound expressed by the Formula (I) are both a hydrogen atom. Thus, more excellent low heat generating property and wear resistance can be achieved.

Preferably, in the tire rubber composition according to the present invention, a molecular weight of the compound expressed by the Formula (I) is 200 or less. Thus, more excellent low heat generating property and wear resistance can be achieved.

Preferably, in the tire rubber composition according to the present invention, a melting point of the compound expressed by the Formula (I) is 80 °C or more and less than 250 °C. Thus, more excellent low heat generating property and wear resistance can be achieved.

Preferably, in the tire rubber composition according to the present invention, a highest frequency value on a Stokes' diameter distribution curve, represented as Dst, of the carbon black is 60 nm or less. More preferably, a half value width with respect to the peak of the Dst on the Stokes' diameter distribution curve of the carbon black is 60 nm or less. More preferably, a ratio of the $\Delta$D50 to the Dst, represented as $\Delta$D50/Dst, of the carbon black is 0.95 or less. Thus, more excellent wear resistance can be achieved.

Preferably, the tire rubber composition according to the present invention further comprises silica. More preferably, a total content of the carbon black and the silica is 50 parts by mass or more with respect to 100 parts by mass of the rubber component. More preferably, a CTAB adsorption specific surface area, represented as CTAB, of the silica is 120 $m^2/g$ or more. Thus, more excellent wear resistance and low heat generating property can be achieved.

Preferably, the tire rubber composition according to the present invention further comprises a silane coupling agent. Thus, various performances such as processability and heat resistance can be improved.

Preferably, the tire rubber composition according to the present invention further comprises a glycerin fatty acid ester. Thus, more excellent low heat generating property and wear resistance can be achieved.

Preferably, the tire rubber composition according to the present invention is a rubber composition for a tire tread. Thus, favorable low heat generating property and excellent wear resistance can be displayed more effectively.

A tire according to the present invention comprises the above-described tire rubber composition according to the present invention.

With this structure, excellent wear resistance can be achieved with favorable low heat generating property.

Preferably, the tire according to the present invention is a heavy-duty tire. Thus, favorable low heat generating property and excellent wear resistance can be displayed more effectively.

(Advantageous Effect)

It is thus possible to provide a tire rubber composition having excellent wear resistance with favorable low heat

generating property. It is also possible to provide a tire excellent in low heat generating property and wear resistance.

DETAILED DESCRIPTION

One of the disclosed embodiments will be described in detail below.

<Tire rubber composition>

A tire rubber composition according to claim 1 is a rubber composition comprising: a rubber component; and a compound expressed by the following Formula (I):

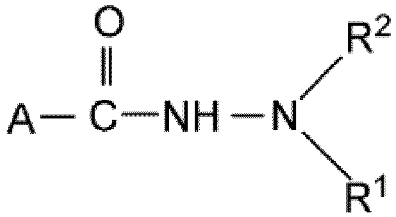

------ (I)

where A is an aryl group having at least two hydroxyl groups, $R^1$ and $R^2$ are each independently at least one substituent selected from the group consisting of a hydrogen atom, an acyl group, an amide group, an alkyl group, a cycloalkyl group, and an aryl group.

(Rubber component)

The tire rubber composition according to the present invention comprises a rubber component containing diene-based rubber.

The structure of the rubber component is not limited as long as it contains diene-based rubber, and may be selected as appropriate depending on required performance. For example, in terms of achieving excellent crack growth resistance and wear resistance, the rubber component may contain either natural rubber or diene-based synthetic rubber, or contain both natural rubber and diene-based synthetic rubber.

The content of the diene-based rubber in the rubber component may be 100 %, but the rubber component may also contain non-diene-based rubber without departing from the object of the present invention. In terms of achieving excellent crack growth resistance and wear resistance, the content of the diene-based rubber in the rubber component is preferably 70 mass% or more, more preferably 80 mass% or more, and further preferably 90 mass% or more.

Examples of the diene-based synthetic rubber include polybutadiene rubber (BR), isoprene rubber (IR), styrene-butadiene rubber (SBR), styreneisoprene-butadiene rubber (SIBR), chloroprene rubber (CR), and acrylonitrile-butadiene rubber (NBR).

Examples of the non-diene-based rubber include ethylene-propylene-diene rubber (EPDM), ethylene-propylene rubber (EPM), and butyl rubber (IIR).

One of these synthetic rubbers may be used singly, or two or more of these synthetic rubbers may be used as a blend.

(Compound expressed by Formula (I))

The tire rubber composition according to claim 1 comprises, in addition to the foregoing rubber component, a compound expressed by the Formula (I):

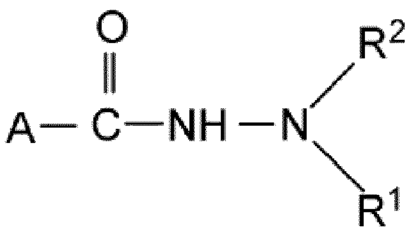

------ (I)

where A is an aryl group. The aryl group has, at any positions, at least two hydroxyl groups. The positions of the hydroxyl

groups may be any positions in the aromatic ring.

$R^1$ and $R^2$ are each independently at least one substituent selected from the group consisting of a hydrogen atom, an acyl group, an amide group, an alkyl group, a cycloalkyl group, and an aryl group.

The aryl group represented as A has high affinity for a filler such as carbon black, and the part having hydrazide skeleton has high affinity for the rubber component. Therefore, as a result of the compound expressed by the Formula (I) being contained in the rubber composition, the chemical interaction between the rubber component and the filler can be improved significantly. Hence, even in the case where carbon black of a small particle size (carbon black with large CTAB) is contained as a reinforcing filler, hysteresis loss caused by friction in the filler can be reduced, so that a decrease in low heat generating property can be suppressed effectively. In addition, improvement in the dispersibility of the filler contributes to improved reinforcement.

Moreover, as a result of significant improvement of the chemical interaction between the rubber component and the filler such as carbon black, scorch property is enhanced (scorch time is increased) while maintaining the low heat generating property of the rubber composition, and consequently processability can be improved.

Examples of the aryl group represented as A in the compound expressed by the Formula (I) include aromatic hydrocarbon groups such as a phenyl group, a naphthyl group, an anthryl group, a phenanthryl group, and a triphenylenyl group. Of these, the aryl group is preferably a phenyl group or a naphthyl group, and more preferably a phenyl group. Thus, excellent affinity for the filler such as carbon black is displayed, so that more excellent low heat generating property can be achieved. Moreover, the number of aromatic rings can be reduced, which is advantageous in terms of cost and also contributes to higher practicality.

The number of polar groups in the aryl group represented as A in the compound expressed by the Formula (I) is two or more. As a result of two or more polar groups being contained in the aromatic ring, high affinity for the filler such as carbon black can be obtained. In the case where the number of polar groups is less than two, the affinity for the filler is insufficient, and the low heat generating property of the rubber composition is likely to decrease.

The types of the polar groups are not limited, and examples include an amino group, an imino group, a nitrile group, an ammonium group, an imide group, an amide group, a hydrazo group, an azo group, a diazo group, a hydroxyl group, a carboxyl group, a carbonyl group, an epoxy group, an oxycarbonyl group, a nitrogen-containing heterocyclic group, an oxygen-containing heterocyclic group, a tin-containing group, an alkoxysilyl group, an alkylamino group, and a nitro group. Of these, the polar groups are preferably a hydroxyl group, an amino group, and/or a nitro group, and more preferably a hydroxyl group and/or an amino group. Thus, more excellent affinity for the filler is displayed, so that the low heat generating property of the rubber composition can be further improved.

In the aryl group represented as A in the compound expressed by the Formula (I), one of the polar groups is preferably at the ortho position with respect to the position of the hydrazide skeleton connected to A. In this case, for example, the aryl group can be expressed by the following Formula (A-1) or Formula (A-2):

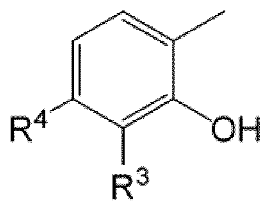
(A−1)、
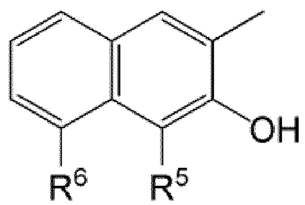
(A−2)

where $R^3$, $R^4$, $R^5$, and $R^6$ are the same as the polar groups of the aryl group described above.

Regarding the hydrazide group connected to A in the compound expressed by the Formula (I), $R^1$ and $R^2$ are each independently at least one substituent selected from the group consisting of a hydrogen atom, an acyl group, an amide group, an alkyl group, a cycloalkyl group, and an aryl group. The substituent may contain one or more of an O atom, an S atom, and an N atom. $R^1$ and $R^2$ may be one substituent having C that forms a double bond with N.

Of the foregoing substituents, $R^1$ and $R^2$ are preferably a hydrogen atom or an alkyl group. More preferably, $R^1$ and $R^2$ are both a hydrogen atom. Thus, the substituents of $R^1$ and $R^2$ have high affinity for the rubber component, so that more excellent low heat generating property can be achieved.

Some representative examples of the compound expressed by the Formula (I) are as follows:

2,6-dihydroxybenzohydrazide

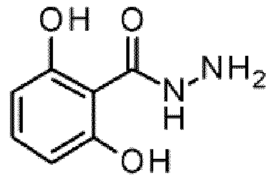

2,3-dihydroxybenzohydrazide

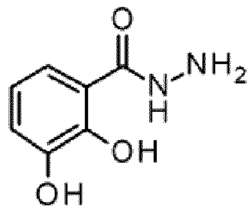

2,4-dihydroxybenzohydrazide

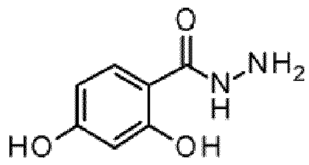

2,5-dihydroxybenzohydrazide

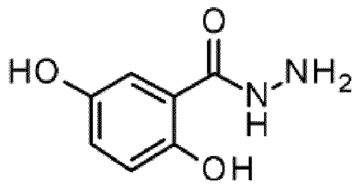

In this case, the compound expressed by the Formula (I) can be expressed by the following Formula (II):

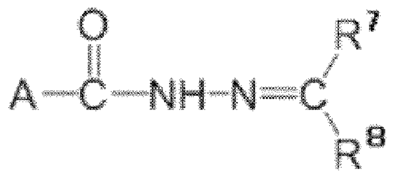 ... (II)

where $R^7$ and $R^8$ are each independently a hydrogen atom, an alkyl group, or an alkenyl group, and A is the same as the above.

Examples of the alkyl group for $R^7$ and $R^8$ include straight-chain or branched-chain alkyl groups with a carbon number of 1 to 16 such as n-pentyl group, isopentyl group, neopentyl group, tert-pentyl group, n-hexyl group, isohexyl group, heptyl group, octyl group, nonyl group, decyl group, undecyl group, dodecyl group, tridecyl group, tetradecyl group, pentadecyl group, and hexadecyl group. Of these, straight-chain or branched-chain alkyl groups with a carbon number of 1 to 12 are preferable, and straight-chain or branched-chain alkyl groups with a carbon number of 1 to 6 are particularly preferable.

Examples of the alkenyl group for $R^7$ and $R^8$ include straight-chain or branched-chain alkenyl groups with a carbon number of 2 to 6 having at least one double bond at any position such as vinyl group, 1-propenyl group, allyl group, isopropenyl group, 2-butenyl group, 3-butenyl group, 1-methyl-2-propenyl group, 3-methyl-2-propenyl group, 1,3-butadienyl group, 1-pentenyl group, 2-pentenyl group, 3-pentenyl group, 4-pentenyl group, 1,1-dimethyl-2-propenyl group, 1-ethyl-2-propenyl group, 1-methyl-2-butenyl group, 1-methyl-3-butenyl group, 1-hexenyl group, 2-hexenyl group, 3-hexenyl group, 4-hexenyl group, 5-hexenyl group, 1,1-dimethyl-2-butenyl group, and 1,1-dimethyl-3-butenyl group.

Of these, straight-chain or branched-chain alkenyl groups with a carbon number of 3 to 5 are preferable, and branched-chain alkenyl groups with a carbon number of 3 to 5 are particularly preferable.

In the compound expressed by the Formula (II), it is preferable that $R^8$ is an isopropyl group when $R^7$ is a hydrogen atom, and preferable that $R^8$ is a 2-methylpropyl group, an undecyl group, or a 2-methylpropenyl group when $R^7$ is a methyl group. Moreover, it is preferable that any one of $R^7$ and $R^8$ is an isopropyl group or an undecyl group, and particularly preferable that $R^8$ is a 2-methylpropyl group when $R^7$ is a methyl group. This imparts more excellent low heat generating property and processability to the rubber composition.

The molecular weight of the compound expressed by the Formula (I) is preferably 200 or less, and more preferably 180 or less. Thus, the affinity for each molecule of the rubber component is increased, so that more excellent low heat generating property can be obtained, and also wear resistance can be further enhanced.

The melting point of the compound expressed by the Formula (I) is preferably 80 °C or more and less than 250 °C, and more preferably 80 °C to 200 °C. By decreasing the melting point of the compound expressed by the Formula (I), the affinity for each molecule of the rubber component is increased, so that more excellent low heat generating property can be obtained, and also wear resistance can be enhanced.

The content of the compound expressed by the Formula (I) in the tire rubber composition according to the present invention is preferably 0.05 parts to 30 parts by mass, more preferably 0.05 parts to 10 parts by mass, particularly preferably 0.05 parts to 5.0 parts by mass, and most preferably 0.1 parts to 2.0 parts by mass, with respect to 100 parts by mass of the rubber component. As a result of the content being 0.05 parts by mass or more with respect to 100 parts by mass of the rubber component, desired low heat generating property and processability can be obtained. As a result of the content being 30 parts by mass or less with respect to 100 parts by mass of the rubber component, other properties such as wear resistance and strength can be maintained favorably.

The tire rubber composition according to the present invention may contain, as the compound expressed by the Formula (I) or the compound expressed by the Formula (II), only one type of compound or a plurality of types of compounds.

(Carbon black)

The tire rubber composition according to the present invention further comprises carbon black, in addition to the foregoing rubber component and compound expressed by the Formula (I).

The nitrogen adsorption specific surface area (CTAB) of the carbon black is 120 $m^2/g$ or more.

By using such carbon black with a small particle size, which has a CTAB of 120 $m^2/g$ or more, the reinforcement of the rubber composition is enhanced, and excellent wear resistance can be obtained. In the case where the CTAB of the carbon black is less than 120 $m^2/g$, the wear resistance is insufficient. From the same perspective, the CTAB of the carbon black is preferably 130 $m^2/g$ or more. No upper limit is placed on the CTAB of the carbon black, but the CTAB is preferably 160 $m^2/g$ or less and more preferably 150 $m^2/g$ or less in terms of maintaining favorable low heat generating property.

The CTAB of the carbon black is the external surface area of the carbon black, exclusive of pores, as indicated by the specific surface area when CTAB (cetyltrimethylammonium bromide) is adsorbed by the carbon black, and can be measured in accordance with JIS K 6217-3 (2001).

The compressed-sample DBP (dibutyl phthalate) absorption number (24M4DBP) of the carbon black is preferably 80 $cm^3$/100 g to 110 $cm^3$/100 g, and more preferably 85 $m^2/g$ to 100 $m^2/g$. Thus, the structure of the carbon black (the structure formed as a result of spherical carbon black primary particles melting and fusing together) can be further optimized, with it being possible to further improve the low heat generating property and the wear resistance.

The 24M4DBP of the carbon black is the DBP (dibutyl phthalate) absorption number measured after the carbon black is compressed four times at a pressure of 24000 psi in accordance with ISO 6894.

The value of 24M4DBP can be adjusted, for example, by controlling the amount of KOH in the production conditions.

The highest frequency value on a Stokes' diameter distribution curve (Dst) of the carbon black is preferably 60 nm or less, and more preferably 55 nm or less. Thus, the particle size of the carbon black can be reduced reliably, and more excellent wear resistance can be achieved.

The Dst of the carbon black is measured by a centrifugal sedimentation method in accordance with JIS K 6217-6. In the centrifugal sedimentation method, the dried carbon black is first precisely weighed and is mixed with a 20% ethanol aqueous solution containing a small amount of a surfactant to prepare a dispersion liquid having a carbon black concentration of 50 mg/l. The prepared dispersion liquid is used as a sample solution after being subjected to sufficient dispersing by ultrasound. The device used in the centrifugal sedimentation method is, for example, a disc centrifuge produced by Joyce-Loebl that is set to a rotation speed of 6000 rpm. The disc centrifuge is charged with 10 ml of a spin liquid (2% glycerin aqueous solution), and then 1 ml of a buffer liquid (ethanol aqueous solution) is poured therein. Next, 0.5 ml of the sample is added into the disc centrifuge using a syringe, centrifugal sedimentation is started

at once, and a distribution curve of formed aggregates is plotted by a photoelectric sedimentation method. A Stokes' diameter corresponding to a peak of the plotted curve is taken to be Dst (nm).

The values of Dst and ΔD50 (described later) can be adjusted, for example, by controlling the reaction temperature and the air ratio in the production conditions.

Regarding the Dst of the carbon black, the full width at half maximum (ΔD50) of the Dst on the distribution curve is preferably 60 nm or less, and more preferably 55 nm or less. This contributes to a sharper structure distribution of the carbon black, as a result of which carbon black with a fine particle size increases, and more excellent wear resistance can be achieved.

The ΔD50 is a width (a half value width) of the distribution curve at a highest position equivalent to 50 % of the frequency (peak) (wt%) of Dst (nm), and can be derived from the distribution curve.

The ratio of the ΔD50 to the Dst (ΔD50/Dst) of the carbon black is more preferably 0.95 or less, and particularly preferably 0.90 or less. This contributes to a sharper structure distribution of the carbon black, as a result of which more excellent wear resistance can be achieved.

The type of the carbon black is not limited, as long as it has the foregoing CTAB. For example, any hard carbon produced by an oil furnace method may be used. In particular, carbon blacks of HAF, ISAF, IISAF, and SAF grade are preferable in terms of achieving more excellent low heat generating property and wear resistance.

The content of the carbon black is preferably 25 parts to 70 parts by mass, more preferably 30 parts to 60 parts by mass, and particularly preferably 30 parts to 50 parts by mass, with respect to 100 parts by mass of the rubber component. As a result of the content of the carbon black being 30 parts by mass or more with respect to 100 parts by mass of the rubber component, more excellent wear resistance can be obtained. As a result of the content of the carbon black being 50 parts by mass or less with respect to 100 parts by mass of the rubber component, the low heat generating property can be further improved.

(Other components)

The tire rubber composition according to the present invention may comprise other components besides the foregoing rubber component, compound expressed by the Formula (I), and carbon black, as long as the effects of the present invention are not lost.

Examples of the other components include additives commonly used in the rubber industry, such as fillers other than the carbon black, age resistors, crosslinking accelerators, crosslinking agents, crosslinking acceleration aids, silane coupling agents, antiozonants, and surfactants.

Examples of the fillers include silica and other inorganic fillers.

Of these, silica is preferably contained as a filler, because more excellent low heat generating property and wear resistance can be achieved.

Examples of the silica include wet silica, colloidal silica, calcium silicate, and aluminum silicate.

Of these, the silica is preferably wet silica, and more preferably precipitated silica as wet silica. These silicas have high dispersibility, so that the low heat generating property and the wear resistance of the rubber composition can be further improved. The "precipitated silica" is silica obtained as a result of promoting reaction of a reaction solution at a relatively high temperature in a neutral to alkaline pH region in an initial stage of production to grow silica primary particles and then controlling the reaction to the acidic side to cause the primary particles to aggregate.

The CTAB adsorption specific surface area (CTAB) of the silica is preferably 130 $m^2/g$ or more, in terms of achieving excellent wear resistance. From the same perspective, the CTAB adsorption specific surface area is more preferably 150 $m^2/g$ or more, and further preferably 180 $m^2/g$ or more.

The CTAB adsorption specific surface area is a value measured in accordance with ASTM D3765-92. Here, the adsorption cross-sectional area per 1 molecule of cetyltrimethylammonium bromide on the silica surface is set to 0.35 $nm^2$, and the specific surface area ($m^2/g$) calculated from the amount of CTAB adsorption is taken to be the CTAB adsorption specific surface area.

The oil absorption of the silica is preferably 160 ml/100 g to 260 ml/100 g, and more preferably 200 ml/100 g or more. Thus, more excellent reinforcement and low loss property can be achieved.

The oil absorption can be measured in accordance with ASTM D2414-93.

The content of the silica is not limited. In terms of achieving excellent low heat generating property and wear resistance of the rubber composition, the total content of the carbon black and the silica is preferably 50 parts by mass or more and more preferably 55 parts by mass or more, with respect to 100 parts by mass of the rubber component.

Examples of the other inorganic fillers include an inorganic compound expressed by the following Formula (III):

$$nM \cdot xSiO_Y \cdot zH_2O \ ... \qquad (III)$$

where M is at least one selected from metals selected from the group consisting of aluminum, magnesium, titanium,

calcium, and zirconium, oxides or hydroxides of these metals, hydrates thereof, and carbonates of these metals, and n, x, y, and z are an integer of 1 to 5, an integer of 0 to 10, an integer of 2 to 5, and an integer of 0 to 10 respectively.

Examples of the inorganic compound expressed by the Formula (III) include alumina ($Al_2O_3$) such as $\gamma$-alumina and $\alpha$-alumina; alumina monohydrate ($Al_2O_3 \cdot H_2O$) such as boehmite and diaspore; aluminum hydroxide [$Al(OH)_3$] such as gibbsite and bayerite; and aluminum carbonate [$Al_2(CO_3)_3$], magnesium hydroxide [$Mg(OH)_2$], magnesium oxide ($MgO$), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide ($CaO$), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], and crystalline aluminosilicate containing hydrogen, alkali metal, or alkaline earth metal that corrects electric charge like various zeolites.

The age resistors are not limited, and may be known age resistors. Examples include phenolic age resistors, imidazole-based age resistors, and amine-based age resistors. One of these age resistors may be used singly, or two or more of these age resistors may be used together.

The crosslinking accelerators are not limited, and may be known crosslinking accelerators. Examples include thiazole vulcanization accelerators such as 2-mercaptobenzothiazole and dibenzothiazyl disulfide; sulfenamide vulcanization accelerators such as N-cyclohexyl-2-benzothiazyl sulfonamide and N-t-butyl-2-benzothiazyl sulfenamide; guanidine vulcanization accelerators such as diphenylguanidine; thiuram vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate vulcanization accelerators such as zinc dimethyldithiocarbamate; and zinc dialkyldihio phosphate.

The crosslinking agents are not limited. Examples include sulfur and bismaleimide compounds.

Examples of the bismaleimide compounds include N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidephenoxy)phenyl]propane, and bis(3-ethyl-5-methyl-4-maleimidephenyl)methane. In the present invention, for example, N,N'-m-phenylenebismaleimide and N,N'-(4,4'-diphenylmethane)bismaleimide are preferably used.

Examples of the crosslinking acceleration aids include zinc oxide (ZnO) and fatty acids. The fatty acids may be any of saturated and unsaturated fatty acids, and may be any of straight-chain and branched fatty acids. The carbon number of the fatty acid is not limited. For example, fatty acids having a carbon number of 1 to 30, preferably a carbon number of 15 to 30, may be used. More specific examples include naphthenic acids such as cyclohexanoic acid (cyclohexanecarboxylic acid) and alkylcyclopentane having a side chain; saturated fatty acids such as hexanoic acid, octanoic acid, decanoic acid (inclusive of branched carboxylic acids such as neodecanoic acid), dodecanoic acid, tetradecanoic acid, hexadecanoic acid, and octadecanoic acid (stearic acid); unsaturated fatty acids such as methacrylic acid, oleic acid, linolic acid, and linoleic acid; and resin acids such as rosin, tall oil acid, and abietic acid. One of these fatty acids may be used singly, or two or more of these fatty acids may be used together. In the present invention, zinc oxide and stearic acid are preferably used.

In the case where silica is contained as a filler, it is preferable to further contain a silane coupling agent. Thus, the processability and the effects of wear resistance and low heat generating property by silica can be further improved. As the silane coupling agent, a known silane coupling agent may be used as appropriate. The preferable content of the silane coupling agent depends on the type of the silane coupling agent and the like, but is preferably in a range of 0.5 mass% to 20 mass%, more preferably in a range of 1 mass% to 15 mass%, and particularly preferably in a range of 1 to 12 mass%, with respect to the silica. If the content is less than 0.5 mass%, the effect as a coupling agent is insufficient. If the content is more than 20 mass%, the rubber component is likely to turn into a gel.

The silane coupling agent is not limited, and may be a known silane coupling agent.

Examples include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3 -trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-nitropropyltrimethoxysilane, 3-nitropropyltriethoxysilane, 3-chloropropylmethoxysilane, 3-chloropropyltriethoxysilane, 2-chloroethyltrimethoxysilane, 2-chloroethyltriethoxysilane, 3-octanoylthio-1-propyltriethoxysilane, 3-trimethoxysilylpropyl-N,N-dimethyllthiocarbamoyltetrasulfide, 3-triethoxysilylpropyl-N,N-dimethyllthiocarbamoyltetrasulfide, 2-triethoxysilylethyl-N,N-dimethyllthiocarbamoyltetrasulfide, 3 - trimethoxysilylpropylbenzothiazoletetrasulfide, 3-triethoxysilylpropylbenzothiazoletetrasulfide, 3-triethoxysilylpropylmethacrylatemonosulfide, 3-trimethoxysilylpropylmethacrylatemonosulfide, bis(3 - diethoxymethylsilylpropyl)tetrasulfide, 3 - mercaptopropyldimethoxymethylsilane, 3-nitropropyldimethoxymethylsilane, 3-chloropropyldimethoxymethylsilane, dimethoxymethylsilylpropyl-N,N-dimethyllthiocarbamoyltetrasulfide, and dimethoxymethylsilylpropylbenzothiazoletetrasulfide. One of these silane coupling agents may be used singly, or two or more of these silane coupling agents may be used together.

Of the foregoing silane coupling agents, 3-octanoylthio-1-propyltriethoxysilane is preferable.

The tire rubber composition according to the present invention preferably further comprises a glycerin fatty acid

ester, in terms of improving processability.

The glycerin fatty acid ester composition is not limited, but it is more preferable that the fatty acid has a carbon number of 8 to 28 and the glycerin fatty acid ester composition contains a glycerin fatty acid monoester and a glycerin fatty acid diester, where the content of the glycerin fatty acid monoester is 40 mass% to 100 mass%. By containing such a glycerin fatty acid ester composition, shrinking and rubber burning are prevented, and improvement in processability by a decrease in the viscosity of the silica-containing unvulcanized rubber and various performances such as heat resistance can be achieved at high level without increasing the vulcanization speed.

The content of the glycerin fatty acid ester composition is not limited, but the content of the glycerin fatty acid monoester is preferably 0.05 parts to 10 parts by mass with respect to 100 parts by mass of the rubber component in terms of achieving both low heat generating property and processability at higher level.

The production method for the tire rubber composition according to the present invention is not limited. For example, the tire rubber composition can be yielded by blending and kneading the rubber component containing diene-based rubber, the compound expressed by the Formula (I), the carbon black, and the other components by a known method.

The tire rubber composition according to the present invention is preferably used as a rubber composition for a tire tread. As a result of being used as a rubber composition for a tire tread, the tire rubber composition according to the present invention can display favorable low heat generating property and excellent wear resistance more effectively.

The "rubber composition for a tire tread" denotes a rubber composition for use in a tread rubber of a tire, and its basic components are the same as those of the tire rubber composition according to the present invention.

<Tire>

A tire according to the present invention is formed using the above-described tire rubber composition according to the present invention. As a result of using the rubber composition for a tire tread according to the present invention in the tread rubber, excellent low heat generating property and wear resistance can be achieved.

The tire according to the present invention is not limited as long as the above-described rubber composition for a tread according to the present invention is used, and can be produced according to conventional methods. As a gas with which the tire is filled, an inert gas such as nitrogen, argon, or helium can be used as well as normal air or air whose oxygen partial pressure has been adjusted.

EXAMPLES

More detailed description will be given below by way of examples, although the present invention is not limited to these examples.

(Compounds a to d)

The types, production methods, melting points, and $^1$H-NMR measurement (conditions: 300 MHz, DMSO-$d_6$, $\delta$ppm) results of compounds a to d are as follows.

- Compound a: 2,6-dihydroxybenzohydrazide

5.29 g of methyl 2,6-dihydroxybenzoate and 3.30 g of 100% hydrazine monohydrate are added to 32 mL of 1-butanol, and stirred at 117 °C for 15 hr. The reaction liquid is cooled, and then the deposited solid is filtered and cleaned with isopropyl alcohol. The resultant solid is dried under reduced pressure, thus obtaining 2.85 g of a light yellow solid 2,6-dihydroxybenzohydrazide (yield: 54 %) having the following chemical formula:

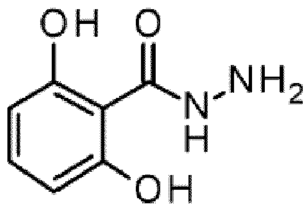

(melting point: 198 °C, $^1$H-NMR (300 MHz, DMSO-$d_6$, $\delta$ppm): 6.3 (d, 2H), 7.1 (t, 1H), NH(3H) and OH(2H) not detected).

- Compound b: 2,3-dihydroxybenzohydrazide

2.75 g of methyl 2,3-dihydroxybenzoate and 7.00 g of 100% hydrazine monohydrate is added to 1.5 mL of water, and stirred at 100 °C for 3 hr. The reaction liquid is concentrated, and then isopropyl alcohol is added to the deposited solid to be filtered and the deposited solid is cleaned with isopropyl alcohol. The resultant solid is dried under reduced pressure, thus obtaining 2.00 g of a light yellow solid 2,3-dihydroxybenzohydrazide (yield: 73 %) having the following chemical formula:

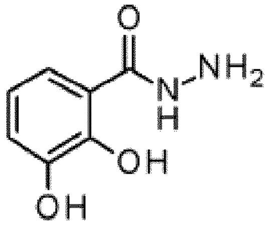

(melting point: 223 °C, $^1$H-NMR (300 MHz, DMSO-$d_6$, δppm): 4.7 (br-s, 2H), 6.7 (m, 1H), 6.9 (m, 1H), 7.2 (m, 1H), 10.1 (br-s, 1H), OH(2H) not detected).

- Compound c: 2,4-dihydroxybenzohydrazide

5.50 g of methyl 2,4-dihydroxybenzoate and 13.4 g of 100% hydrazine monohydrate are added to 3 mL of water, and stirred at 100 °C for 3 hr. The reaction liquid is concentrated, and then isopropyl alcohol is added to the deposited solid to be filtered and the deposited solid is cleaned with isopropyl alcohol. The resultant solid is dried under reduced pressure, thus obtaining 4.82 g of a light yellow solid 2,4-dihydroxybenzohydrazide (yield: 88 %) having the following chemical formula:

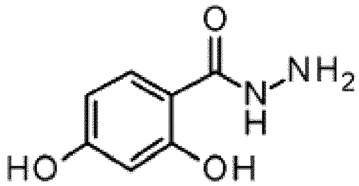

(melting point: 237 °C, $^1$H-NMR (300 MHz, DMSO-$d_6$, δppm): 6.2 (m, 2H), 7.6 (m, 1H), NH(3H) and OH(2H) not detected).

- Compound d: 2,5-dihydroxybenzohydrazide

5.39 g of methyl 2,5-dihydroxybenzoate and 3.29 g of 100% hydrazine monohydrate are added to 32 mL of 1-butanol, and stirred at 117 °C for 15 hr. The reaction liquid is cooled, and then the deposited solid is filtered and cleaned with isopropyl alcohol. The resultant solid is dried under reduced pressure, thus obtaining 4.26 g of a light yellow solid 2,5-dihydroxybenzohydrazide (yield: 79 %) having the following chemical formula:

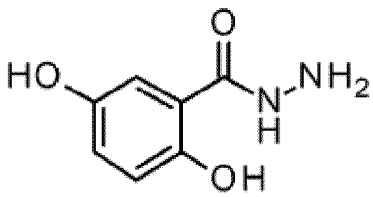

(melting point: 210 °C, $^1$H-NMR (300 MHz, DMSO-$d_6$, δppm): 4.6 (br-s, 2H), 6.7 (m, 1H), 6.8 (m, 1H), 7.2 (m, 1H), 9.0 (br-s, 1H), 9.9 (br-s, 1H), 11.5 (br-s, 1H)).

(Carbon blacks A to F)

Carbon blacks A to F of the conditions listed in Table 1 are prepared. Carbon blacks A to F are produced by using HAF grade carbon black (produced by Asahi Carbon Co., Ltd.) and adjusting the reaction temperature, the air ratio, the amount of KOH, and the reaction time.

Table 1 lists CTAB, 24M4DBP, Dst, and ΔD50. Dst and ΔD50 are measured by the centrifugal sedimentation method using a disc centrifuge produced by Joyce-Loebl.

Table 1

| | Carbon black | | | | | |
|---|---|---|---|---|---|---|
| | A | B | C | D | E | F |
| CTAB ($m^2/g$) | 122 | 145 | 130 | 138 | 121 | 116 |
| 24M4DBP ($cm^3/100g$) | 93 | 90 | 95 | 101 | 100 | 100 |
| Dst (nm) | 57 | 50 | 65 | 54 | 64 | 82 |
| ΔD50 (nm) | 69 | 60 | 60 | 46 | 49 | 63 |
| ΔD50/Dst | 1.21 | 1.20 | 0.92 | 0.85 | 0.77 | 0.77 |

<Examples 1 to 9, Comparative Examples 1 to 9>

A rubber composition of each sample is prepared based on the ingredients listed in Table 2. The prepared rubber composition of each sample is then used as a tread rubber to produce a sample tire (off the road tire: 4000R57) according to typical vulcanization conditions, and the following performance tests are conducted on each sample tire.

(1) Low heat generating property

Each sample tire is subjected to a drum test under step road conditions at a constant speed, and temperature is measured at a fixed position on the inner side of the tread.

For evaluation, an index value with respect to the measurement temperature of the sample tire of Comparative Example 1 being set to 100 is used. A lower measurement temperature indicates a lower heat generating temperature, and better low heat generating property.

(2) Wear resistance

For each sample tire, the groove depth remaining (remaining groove depth) after running for 2000 hr is measured at several points, and the average of the measurement values is calculated. The wear resistance is then calculated according to the following formula:

$$\text{wear resistance} = [(\text{remaining groove depth of each sample tire})/(\text{remaining groove depth of tire of Comparative Example 1})] \times 100.$$

For evaluation, a larger calculation result (wear resistance) indicates better wear resistance.

Table 2

| | | Comparative Example | | | | | | | | | Example | | | | | | | | |
|---|---|---|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 6 | 7 | 8 | 9 |
| Ingredients (parts by mass) | Natural rubber | 100 | 100 | 100 | 100 | 100 | 100 | 100 | 100 | 100 | 100 | 100 | 100 | 100 | 100 | 100 | 100 | 100 | 100 |
| | Carbon black A | 50 | 40 | 40 | - | - | - | - | - | - | 50 | - | - | - | - | - | - | - | - |
| | Carbon black B | - | - | - | 40 | - | - | - | - | - | - | - | - | - | - | - | - | - | - |
| | Carbon black C | - | - | - | - | 50 | - | - | 40 | - | - | 50 | - | - | - | - | - | - | - |
| | Carbon black D | - | - | - | - | - | 50 | - | - | 40 | - | - | 40 | 40 | 40 | 40 | 40 | 40 | - |
| | Carbon black E | - | - | - | - | - | - | - | - | - | - | - | - | - | - | - | - | - | 40 |
| | Carbon black F | - | - | - | - | - | - | 50 | - | - | - | - | - | - | - | - | - | - | - |
| | Silica A *1 | - | 10 | 20 | - | - | - | - | 10 | 10 | - | - | 10 | 10 | 10 | 10 | 10 | 20 | 20 |
| | Silica B *2 | - | - | - | 10 | - | - | - | - | - | - | - | - | - | - | - | - | - | - |
| | Compound a | - | - | - | - | - | - | 0.3 | - | - | 0.3 | 0.3 | 0.3 | - | - | - | 1 | 0.3 | 0.3 |
| | Compound b | - | - | - | - | - | - | - | - | - | - | - | - | 0.3 | - | - | - | - | - |
| | Compound c | - | - | - | - | - | - | - | - | - | - | - | - | - | 0.3 | - | - | - | - |
| | Compound d | - | - | - | - | - | - | - | - | - | - | - | - | - | - | 0.3 | - | - | - |
| | Age resistor *3 | 1 | 1 | 1 | 1 | 1 | 1 | 1 | 1 | 1 | 1 | 1 | 1 | 1 | 1 | 1 | 1 | 1 | 1 |
| | Stearic acid | 2 | 2 | 2 | 2 | 2 | 2 | 2 | 2 | 2 | 2 | 2 | 2 | 2 | 2 | 2 | 2 | 2 | 2 |
| | Wax *4 | 2 | 2 | 2 | 2 | 2 | 2 | 2 | 2 | 2 | 2 | 2 | 2 | 2 | 2 | 2 | 2 | 2 | 2 |
| | Zinc oxide | 3 | 3 | 3 | 3 | 3 | 3 | 3 | 3 | 3 | 3 | 3 | 3 | 3 | 3 | 3 | 3 | 3 | 3 |
| | Silane coupling agent *6 | - | 0.5 | 1 | 0.5 | - | - | - | 0.5 | 0.5 | - | - | 0.5 | 0.5 | 0.5 | 0.5 | 0.5 | 1 | 1 |
| | Glycerin fatty acid ester *7 | - | 1 | 2 | 1 | - | - | - | 1 | 1 | - | - | 1 | 1 | 1 | 1 | 1 | 2 | 2 |
| | Vulcanization accelerator *5 | 1 | 1.1 | 1.1 | 1.1 | 1 | 1 | 1 | 1.1 | 1.1 | 1 | 1 | 1.1 | 1.1 | 1.1 | 1.1 | 1.1 | 1.1 | 1.1 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Evaluation | Heat generating property | 100 | 103 | 113 | 111 | 102 | 104 | 94 | 104 | 106 | 95 | 96 | 96 | 98 | 101 | 101 | 88 | 103 | 102 |
| | Wear resistance | 100 | 117 | 122 | 115 | 107 | 111 | 92 | 124 | 129 | 102 | 108 | 131 | 132 | 129 | 130 | 133 | 136 | 138 |

*1: "Nipsil KQ" produced by Tosoh Silica Corporation, CTAB specific surface area (measurement value in accordance with ASTM D3765-92): 230 $m^2/g$, oil absorption (measurement value in accordance with JIS K 5101): 230 ml/100 g
*2: "Nipsil VN3" produced by Tosoh Silica Corporation, CTAB specific surface area (measurement value in accordance with ASTM D3765-92): 170 $m^2/g$, oil absorption (measurement value in accordance with JIS K 5101): 160 ml/100 g
*3: N-phenyl-N'-(1,3-dimethylbutyl)-p-phenylenediamine, "NOCRAC 6C" produced by Ouchi Shinko Chemical Industrial Co., Ltd.
*4: "Microcrystalline wax, OZOACE-0701" produced by Nippon Seiro Co., Ltd.
*5: N-cyclohexyl-2-benzothiazyl sulfenamide, "NOCCELER CZ" produced by Ouchi Shinko Chemical Industrial Co., Ltd.
*6: "NXT Silane" produced by Momentive Performance Materials Inc.
*7: Glycerin fatty acid ester is prepared through synthesis with the fatty acid being changed from octanoic acid to palm-derived cured fatty acid of the same molar quantity and then molecular distillation according to the method described in Production Example 1 in WO 2014/098155 A1 (glycerin fatty acid ester composition). The glycerin fatty acid monoester content of the obtained glycerin fatty acid ester composition is 97 mass%.

The results in Table 2 demonstrate that the sample tire of each Example displayed favorable low heat generating property and wear resistance.

INDUSTRIAL APPLICABILITY

It is thus possible to provide a tire rubber composition having excellent wear resistance with favorable low heat generating property. It is also possible to provide a tire excellent in low heat generating property and wear resistance.

## Claims

1. A tire rubber composition comprising:

    a rubber component containing diene-based rubber;
    a compound expressed by the following Formula (I); and
    carbon black whose CTAB adsorption specific surface area, represented as CTAB, is 120 $m^2/g$ or more,

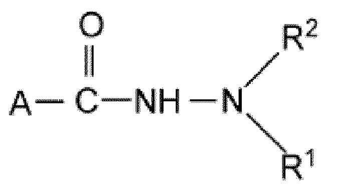

------ (I)

    where A is an aryl group having at least two hydroxyl groups, $R^1$ and $R^2$ are each independently at least one substituent selected from the group consisting of a hydrogen atom, an acyl group, an amide group, an alkyl group, a cycloalkyl group, and an aryl group.

2. A tire rubber composition comprising:

    a rubber component containing diene-based rubber;
    a compound expressed by the following Formula (II); and
    carbon black whose CTAB adsorption specific surface area, represented as CTAB, is 120 $m^2/g$ or more,

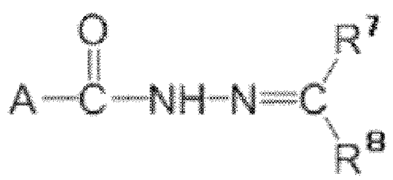

• • • (II)

where A is an aryl group expressed by the following Formula (A-1) or Formula (A-2), and $R^7$ and $R^8$ are each independently at least one substituent selected from a hydrogen atom, an alkyl group, and an alkenyl group,

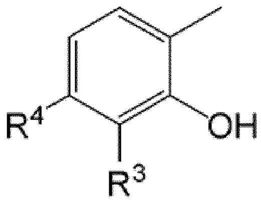
(A−1)、
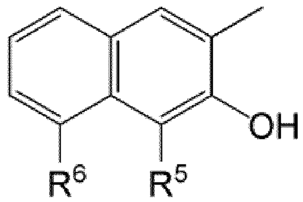
(A−2)

where $R^3$, $R^4$, $R^5$, and $R^6$ are polar groups.

3. The tire rubber composition according to claim 2, wherein the $R^3$, $R^4$, $R^5$, and $R^6$ of Formula (A-1) or Formula (A-2) are each independently at least one of a hydroxyl group and an amide group.

4. The tire rubber composition according to claim 1, wherein A in the compound expressed by the Formula (I) is a phenyl group or a naphthyl group.

5. The tire rubber composition according to claim 1 or claim 4, wherein $R^1$ and $R^2$ in the compound expressed by the Formula (I) are both a hydrogen atom.

6. The tire rubber composition according to any one of claims 1, 4 or 5, wherein a molecular weight of the compound expressed by the Formula (I) is 200 or less.

7. The tire rubber composition according to any one of claims 1, 4, 5 or 6, wherein a melting point of the compound expressed by the Formula (I) is 80 °C or more and less than 250 °C.

8. The tire rubber composition according to any one of claims 1 to 7, wherein a highest frequency value on a Stokes' diameter distribution curve, represented as Dst, of the carbon black is 60 nm or less.

9. The tire rubber composition according to any one of claims 1 to 8, wherein a half value width with respect to the peak of the Dst on the Stokes' diameter distribution curve, represented as ΔD50, of the carbon black is 60 nm or less.

10. The tire rubber composition according to any one of claims 1 to 9, wherein a ratio of the ΔD50 to the Dst, represented as ΔD50/Dst, of the carbon black is 0.95 or less.

11. The tire rubber composition according to any one of claims 1 to 10, further comprising silica.

12. The tire rubber composition according to claim 11, wherein a total content of the carbon black and the silica is 50 parts by mass or more with respect to 100 parts by mass of the rubber component.

13. The tire rubber composition according to claim 11 or 12, wherein a CTAB adsorption specific surface area, represented as CTAB, of the silica is 120 $m^2/g$ or more.

14. The tire rubber composition according to any one of claims 1 to 13, further comprising a silane coupling agent.

15. The tire rubber composition according to any one of claims 1 to 14, further comprising a glycerin fatty acid ester.

16. The tire rubber composition according to any one of claims 1 to 15, being a rubber composition for a tire tread.

17. A tire comprising the tire rubber composition according to any one of claims 1 to 16.

18. The tire according to claim 17, being a heavy-duty tire.

**Patentansprüche**

1. Reifen-Kautschukzusammensetzung, die Folgendes umfasst:

   eine Kautschukkomponente, die Kautschuk auf Grundlage von Dien enthält,
   eine Verbindung, die durch die folgende Formel (I) ausgedrückt wird, und
   Ruß, dessen CTAB-adsorptionsspezifische Oberfläche, dargestellt als CTAB, 120 $m^2/g$ oder mehr beträgt,

   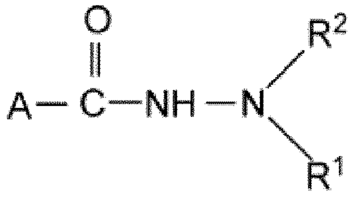 (I),

   wobei A eine Arylgruppe ist, die mindestens zwei Hydroxylgruppen aufweist, wobei $R^1$ und $R^2$ jeweils unabhängig mindestens ein Substituent sind, der ausgewählt ist aus der Gruppe, die aus einem Wasserstoffatom, einer Acylgruppe, einer Amidgruppe, einer Alkylgruppe, einer Cycloalkylgruppe und einer Arylgruppe besteht.

2. Reifen-Kautschukzusammensetzung, die Folgendes umfasst:

   eine Kautschukkomponente, die Kautschuk auf Grundlage von Dien enthält,
   eine Verbindung, die durch die folgende Formel (II) ausgedrückt wird, und
   Ruß, dessen CTAB-adsorptionsspezifische Oberfläche, dargestellt als CTAB, 120 $m^2/g$ oder mehr beträgt,

   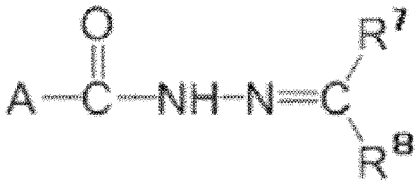 (II),

   wobei A eine Arylgruppe ist, die durch die folgende Formel (A-1) oder Formel (A-2) ausgedrückt wird, und $R^7$ und $R^8$ jeweils unabhängig mindestens ein Substituent sind, der ausgewählt ist aus einem Wasserstoffatom, einer Alkylgruppeund einer Alkenylgruppe,

   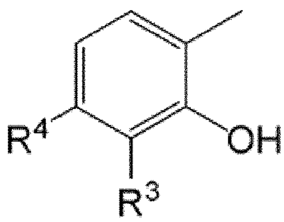 (A−1)、 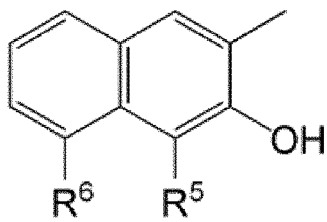 (A−2),

   wobei $R^3$, $R^4$, $R^5$ und $R^5$ polare Gruppen sind.

3. Reifen-Kautschukzusammensetzung nach Anspruch 2, wobei die $R^3$, $R^4$, $R^5$ und $R^6$ von Formel (A-1) oder Formel (A-2) jeweils unabhängig mindestens eines von einer Hydroxylgruppe und einer Amidgruppe sind.

4. Reifen-Kautschukzusammensetzung nach Anspruch 1, wobei A in der durch die folgende Formel (I) ausgedrückten Verbindung eine Phenylgruppe oder eine Naphtylgruppe ist.

5. Reifen-Kautschukzusammensetzung nach Anspruch 1 oder Anspruch 4, wobei $R^1$ und $R^2$ in der durch die folgende Formel (I) ausgedrückten Verbindung beide ein Wasserstoffatom sind.

**6.** Reifen-Kautschukzusammensetzung nach einem der Ansprüche 1, 4 oder 5, wobei eine relative Molekülmasse der durch die folgende Formel (I) ausgedrückten Verbindung 200 oder weniger beträgt.

**7.** Reifen-Kautschukzusammensetzung nach einem der Ansprüche 1, 4, 5 oder 6, wobei ein Schmelzpunkt der durch die folgende Formel (I) ausgedrückten Verbindung 80 °C oder mehr und weniger als 250 °C beträgt.

**8.** Reifen-Kautschukzusammensetzung nach einem der Ansprüche 1 bis 7, wobei ein höchster Frequenzwert auf einer Stokes-Durchmesserverteilungskurve, dargestellt als Dst, des Rußes 60 nm oder weniger beträgt.

**9.** Reifen-Kautschukzusammensetzung nach einem der Ansprüche 1 bis 8, wobei eine Halbwertsbreite in Bezug auf die Spitze des Dst auf der Stokes-Durchmesserverteilungskurve, dargestellt als ΔD50, des Rußes 60 nm oder weniger beträgt.

**10.** Reifen-Kautschukzusammensetzung nach einem der Ansprüche 1 bis 9, wobei ein Verhältnis der ΔD50 zu dem Dst, dargestellt als ΔD50/Dst, des Rußes 0,95 oder weniger beträgt.

**11.** Reifen-Kautschukzusammensetzung nach einem der Ansprüche 1 bis 10, die ferner Siliziumdioxid umfasst.

**12.** Reifen-Kautschukzusammensetzung nach Anspruch 11, wobei ein Gesamtgehalt des Rußes und des Siliziumdioxids 50 Teile nach Masse oder mehr in Bezug auf 100 Teile nach Masse der Kautschukkomponente beträgt.

**13.** Reifen-Kautschukzusammensetzung nach Anspruch 11 oder 12, wobei eine CTAB-adsorptionsspezifische Oberfläche, dargestellt als CTAB, des Siliziumdioxids 120 $m^2/g$ oder mehr beträgt.

**14.** Reifen-Kautschukzusammensetzung nach einem der Ansprüche 1 bis 13, die ferner einen Silan-Haftvermittler umfasst.

**15.** Reifen-Kautschukzusammensetzung nach einem der Ansprüche 1 bis 14, die ferner ein Glycerinfettsäureester umfasst.

**16.** Reifen-Kautschukzusammensetzung nach einem der Ansprüche 1 bis 15, die eine Kautschukzusammensetzung für eine Reifenlauffläche ist.

**17.** Reifen, der die Reifen-Kautschukzusammensetzung nach einem der Ansprüche 1 bis 16 umfasst.

**18.** Reifen nach Anspruch 17, der ein Schwerlastreifen ist.

## Revendications

**1.** Composition de caoutchouc pour un bandage pneumatique, comprenant :

un composant de caoutchouc contenant du caoutchouc à base de diène ;
un composé exprimé par la formule suivante (1) ; et
du noir de carbone dont l'aire de surface spécifique d'adsorption de CTAB, représentée par CTAB, correspond à 120 $m^2/g$ ou plus,

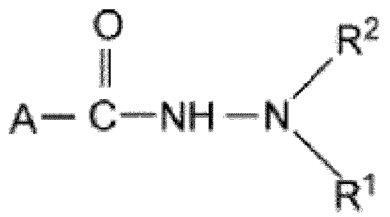 ------ (I)

dans laquelle A est un groupe aryle comportant au moins deux groupes hydroxyles, $R^1$ et $R^2$ étant chacun indépendamment au moins un substituant sélectionné dans le groupe constitué d'un atome d'hydrogène, d'un groupe acyle, d'un groupe amide, d'un groupe alkyde, d'un groupe cycloalkyle et d'un groupe aryle.

**2.** Composition de caoutchouc pour un bandage pneumatique, comprenant :

un composant de caoutchouc contenant du caoutchouc à base de diène ;
un composé exprimé par la formule suivante (1I); et
du noir de carbone dont l'aire de surface spécifique d'adsorption de CTAB, représentée par CTAB, correspond à 120 $m^2$/g ou plus,

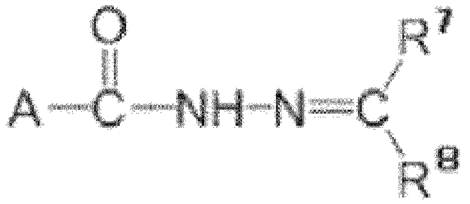

··· (II)

dans laquelle A est un groupe aryle exprimé par la formule suivante (A-1) ou la formule (A-2) et R7 et R8 étant chacun indépendamment au moins un substituant sélectionné dans le groupe constitué d'un atome d'hydrogène, d'un groupe alkyle et d'un groupe alcényle,

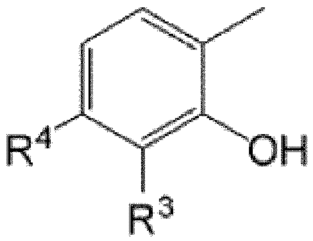

(A−1),

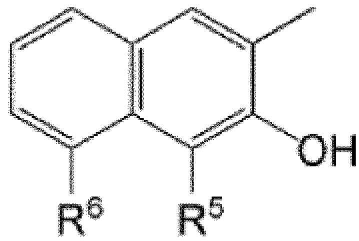

(A−2)

dans laquelle $R^3$, $R^4$, $R^5$ et $R^6$ sont des groupes polaires.

**3.** Composition de caoutchouc pour un bandage pneumatique selon la revendication 2, dans laquelle les $R^3$, $R^4$, $R^5$ et $R^6$ de la formule (A-1) ou de la formule (A-2) sont chacun indépendamment au moins un d'un groupe hydroxyle et d'un groupe amide.

**4.** Composition de caoutchouc pour n bandage pneumatique selon la revendication 1, dans laquelle A dans le composé exprimé par la formule (1) est un groupe phényle ou un groupe naphtyle.

**5.** Composition de caoutchouc pour un bandage pneumatique selon la revendication 1 ou la revendication 4, dans lequel $R^1$ et $R^2$ dans le composé exprimé par la formule (1) sont tous les deux un atome d'hydrogène.

**6.** Composition de caoutchouc pour un bandage pneumatique selon l'une quelconque des revendications 1, 4 ou 5, dans laquelle un poids moléculaire du composé exprimé par la formule (1) correspond à 200 ou moins.

**7.** Composition de caoutchouc pour un bandage pneumatique selon l'une quelconque des revendications 1, 4, 5 ou 6, dans laquelle un point de fusion du composé exprimé par la formule (1) correspond à 80°C ou plus et à moins de 250°C.

**8.** Composition de caoutchouc pour un bandage pneumatique selon l'une quelconque des revendications 1 à 7, dans laquelle une valeur de fréquence maximale sur une courbe de distribution du diamètre de Stokes, représentée par Dst, du noir de carbone correspond à 60 nm ou moins ;

**9.** Composition de caoutchouc pour un bandage pneumatique selon l'une quelconque des revendications 1 à 8, dans laquelle une largeur de demi-largeur par rapport au sommet de DST sur la courbe de distribution du diamètre de Stokes, représentée par ΔD50, du noir de carbone correspond à 60 nm ou moins.

**10.** Composition de caoutchouc pour un bandage pneumatique selon l'une quelconque des revendications 1 à 9, dans laquelle un rapport entre ΔD50 et Dst représenté par ΔD50/Dst, du noir de carbone correspond à 0,95 ou moins.

11. Composition de caoutchouc pour un bandage pneumatique selon l'une quelconque des revendications 1 à 10, comprenant en outre de la silice.

12. Composition de caoutchouc pour un bandage pneumatique selon la revendication 11, dans laquelle une teneur totale en noir de carbone et silice correspond à 50 parties en poids ou plus par rapport à 100 parties en poids du composant de caoutchouc.

13. Composition de caoutchouc pour un bandage neumatique selon les revendications 11 ou 12, dans laquelle une aire de surface spécifique d'adsorption du CTAB, représentée par CTAB, de la silice correspond à 120 $m^2/g$ ou plus.

14. Composition de caoutchouc pour un bandage pneumatique selon l'une quelconque des revendications 1 à 13, comprenant en outre un agent de couplage de silane.

15. Composition de caoutchouc pour un bandage pneumatique selon l'une quelconque des revendications 1 à 14, comprenant en outre un ester d'acide gras de glycérine.

16. Composition de caoutchouc pour un bandage pneumatique selon l'une quelconque des revendications 1 à 15, constituant une composition de caoutchouc pour une bande de roulement d'un bandage pneumatique.

17. Bandage pneumatique, comprenant la composition de caoutchouc pour bandage pneumatique selon l'une quelconque des revendications 1 à 16.

18. Bandage pneumatique selon la revendication 17, constituant un bandage pneumatique pour poids-lourds.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11209515 A
- WO 2014098155 A1